# EUROPEAN PATENT APPLICATION

(11) **EP 1 035 269 A2**
(43) Date of publication of application: **13.09.2000**
(21) Application number: 00301775.3
(22) Date of filing: 03.03.2000
(51) Int. Cl.: E04F 15/18, E04F 13/04, E04F 13/08, B32B 11/10, B32B 27/12

(54) **Composite membrane**

(30) Priority: 05.03.1999 GB 9905205
(71) Applicant: Premier Coatings Limited, Ashford, Kent TN27 8PJ (GB)
(72) Inventor: Day, Nigel Stanley Mercer, Premier Coatings Ltd, Ashford, Kent TN27 8PJ (GB)
(74) Representative: Hayes, Adrian Chetwynd

(57) **Abstract**

A composite membrane comprising a first layer comprising an adhesive composition and a second layer comprising a mesh, wherein the mesh is directly embedded in a surface of the first layer of adhesive with areas of the adhesive composition exposed through apertures in the mesh, the mesh having between 10 and 30 warps/100 mm and between 10 and 30 wefts/100 mm.

## Description

The present invention relates to a composite membrane, and in particular to a composite membrane having adhesive properties, incorporating a load bearing structure and which is impervious to water.

The present invention will be described with reference to its use in affixing ceramic tiles to a building substrate such as a wall or a floor. However, the composite membrane according to the present invention should not be considered limited to such use and it should be appreciated that the composite membrane is suitable for use in a number of applications. For example, in the civil engineering industry, the composite membrane is particularly suitable for use in affixing cavity wall insulation to a substrate. The composite membrane is also suitable for use in affixing materials used for damping noise and vibration to a substrate, such as those used with vehicle body panels.

In the past, ceramic tiles have been applied to walls or floors that are flat or have been rendered flat by the application of cement or plaster. Typically, an adhesive is applied to the tile or to the substrate to which it is to be affixed and the tile is then offered up to and placed in contact with the substrate. After positioning of the tile, it is usual that the tile be left for a period of time to allow setting or drying of the adhesive before the space formed between adjacent tiles is filled with a grout.

This traditional approach to the tiling of a building substrate is time consuming, especially in a case where the substrate to be tiled requires preparation to render it sufficiently flat to receive tiles. The methods used to date require a not inconsiderable degree of skill and experience in order to effect a satisfactory finish.

The brittle nature of the materials used to date introduces problems when the substrate being tiled is subjected to movement. This movement can result from vibration, non-linear expansion and contraction between surfaces, imperfect setting or drying of materials, or as a result of simple variations in atmospheric conditions. The resulting movement causes faults to occur both in the grout between adjacent tiles and in the layer of adhesive between the tiles and the substrate. In extreme cases visible voids and cracks are evident and certain tiles may become detached from a substrate.

Tiles are most commonly affixed to a substrate which is exposed to water such as in the case of a shower, bathroom, or kitchen splash back. Accordingly, it is often necessary to introduce a waterproof layer between the tile and the substrate to which it is to be affixed in order to prevent moisture and water from entering faults in the grouted joints between adjacent tiles and passing through to the back of a tile. More generally, it is also necessary to prevent the ingress of moisture and water through a building substrate from reaching the back of a tile.

To date, a number of different methods have been proposed and employed to overcome the problems described above. One such method involves the application of a bitumen coating or other waterproofing paint to the substrate to which the tile is to be affixed. Alternatively, a waterproof layer such as a high density polyethylene sheet can be introduced between the tile and substrate. In either case, the tiles are then applied in the normal way using an adhesive, but setting or drying of the adhesive may be slower and adhesion to the waterproof layer may be inferior.

A number of adhesives have been developed which contain additional ingredients to improve the elasticity and/or waterproofing capability of the adhesive. However, whilst these adhesives have been successful in maintaining adhesion of the tiles to the substrate to which they are affixed, they still do not provide an impervious waterproof layer between the tiles and the substrate. This layer of adhesive can still be compromised and permits the passage of moisture and water therethrough.

The resulting permeation of moisture and water can cause significant damage, both aesthetic and structural, and is costly to repair.

EP-B-0386324 provides a cold-setting bituminous bonding agent for laying tiles in a thin bed or for applying plaster to a water permeable substrate which comprises a cold-setting bituminous layer whose underside directly adheres to the building substrate and a further layer of a material having a relief structure. The further layer has two portions, a lower layer which is a fleece or a fabric or a foil, applied directly to the bituminous layer, and an upper mesh layer. Tiles are adhered to the mesh layer using a conventional tile adhesive. None of the bituminous layer is exposed to the tile adhesive and there is no direct interaction between the tile adhesive and the bituminous layer.

The present invention provides in a first aspect a composite membrane comprising:
a first layer comprising an adhesive composition, and
a second layer comprising a mesh, wherein:
the mesh is directly embedded in a surface of the first layer of adhesive with areas of the adhesive composition exposed through apertures in the mesh, the mesh having between 10 and 30 warps/100 mm and between 10 and 30 wefts/100 mm.

In a second aspect the invention provides a method of manufacture of a composite membrane comprising the steps of:
forming a substrate of an adhesive composition;
forming a mesh; and
embedding the mesh in one surface of the substrate of adhesive in such a way that areas of the adhesive composition are exposed through apertures in the embedded mesh, the mesh having between 10 and 30 warps/100 mm and between 10 and 30 wefts/100 mm.

The present invention makes use of the adhesive properties of e.g. a bituminous layer on both sides of the membrane, exposing the bituminous layer through apertures in the mesh material. Tiles can either be directly adhered to the composite membrane using the adhesion of the bituminous layer, or tile adhesive can be used with the adhesive directly interacting with the bituminous layer.

Preferred embodiments of the present invention will now be described by way of example only with reference to the accompanying drawings in which:
Figure 1 is a exploded perspective view from above of a composite membrane according to the present invention;
Figure 2 is a sectional view of the composite membrane of Figure 1;
Figure 3 illustrates the composite membrane in position on a wall with tiles attached thereto;
Figure 4 is a sectional view of the composite membrane of Figure 3 in position having tiles affixed thereto.

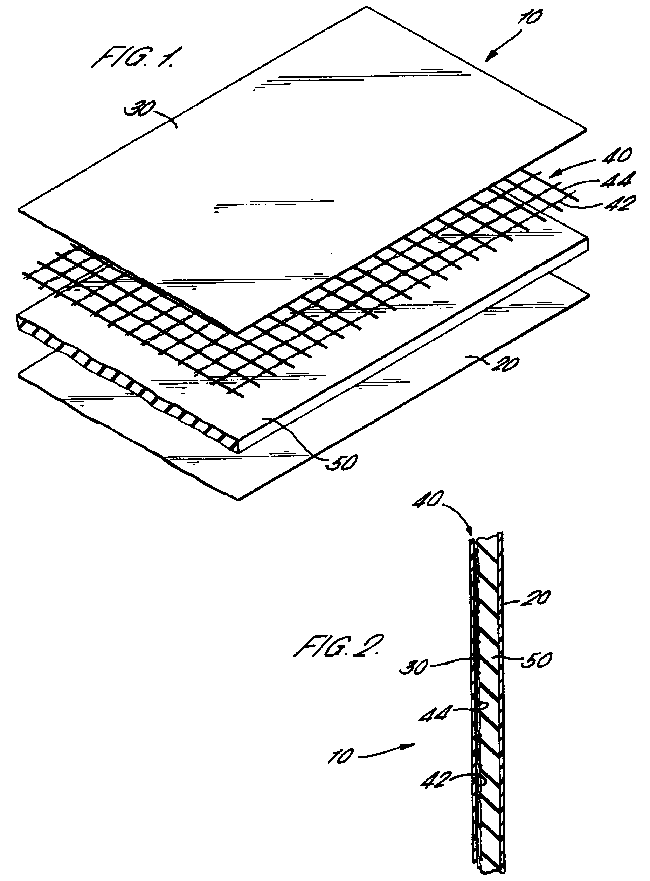

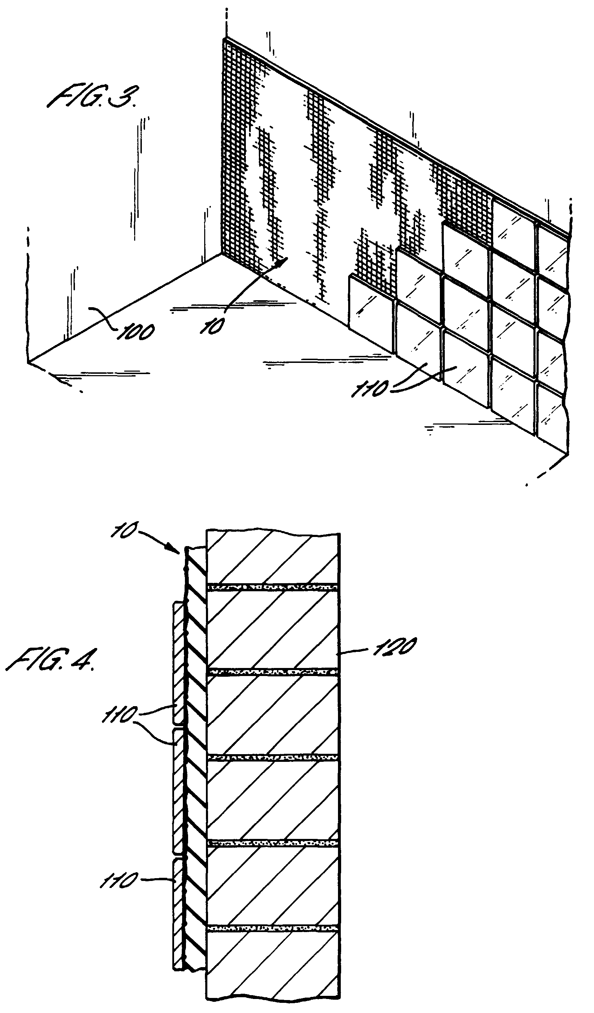

Referring now to Figures 1 and 2, the composite membrane 10 according to a preferred embodiment of the present invention can be seen to comprise four layers 20, 30, 40, 50.

A first layer 50 of the composite membrane 10 comprises an adhesive composition 50, preferably comprising a bituminous composition and/or a butyl rubber composition, of substantially uniform thickness, typically between 1.0 mm and 2.0 mm, in the form of a web. The adhesive composition 50 has a setting point above 100°C. In the preferred embodiment, the adhesive composition 50 used is a blend comprising bitumen, a styrene-butadiene block copolymer and cross-linking agents. Such a composition is well known in the art and details of a particularly suitable composition and a method of manufacture are described in UK Patent Application No. GB 2305667 A.

The applicant has tested a number of formulations which comprise bitumen and/or butyl rubber and which are also considered suitable for use in the present invention. Examples of suitable formulations comprising bitumen and/or elastomers are described for instance in a technical paper published by Shell Chemicals (reference TPE 6.3.1. issued December 1994). A range of Shell Chemicals thermoplastic elastomers used are traded under the name of "Kraton Rubbers" (RTM) and include styrene-isoprene-styrene (SIS rubber) and styrene-butadiene-styrene copolymers (SBS rubber). The modification of bitumen using SIS rubber, SBS rubber and SBR rubber (random styrene-butadiene) is described in a publication entitled "Shell Bitumen Handbook" published by Shell Bitumens UK (ISBN 0-95 16625-0-3, 1990 edition).

The use of compositions based on butyl rubber is also well known in the art and is described in a publication entitled "Polysar Butyl Handbook" published by Technical Publications Section (Polysar Limited, Canada).

In particular, five such formulations suitable for use with the present invention are:

| Formulation | Constituent Parts w/w (% by weight) | |
|---|---|---|
| 1 | Bitumen | 94 - 88 |
| | Styrene-Butadiene-Sytrene | 6 - 12 |
| 2 | Bitumen | 60 - 94 |
| | Styrene-Butadiene Rubber | 4 - 10 |
| | Mineral Oil | 0 - 30 |
| 3 | Bitumen | 91 - 76 |
| | Styrene-Butadiene-Styrene | 6 - 12 |
| | Mineral Oil | 3 - 12 |
| 4 | Bitumen | 86 - 94 |
| | Styrene Butadiene | 3 - 8 |
| | Styrene Isoprene | 3 - 8 |
| 5 | Butyl Rubber | 50 - 60 |
| | Carbon Black | 30 - 40 |
| | Soft Clay | 0 - 5 |
| | Paraffin Wax | 1 - 2 |

In each case, the bitumen and/or butyl rubber constituent is largely responsible for the adhesive and waterproofing properties of the compound 50. The styrene or butyl rubber constituent provides the flexibility and resilience associated with a rubber compound.

It will be appreciated that modifications to the exact composition of the bituminous or butyl rubber composition 50 used are possible and do not fall outside the scope of the claims. It is well known in the art to alter exact compositions or to substitute additives dependant upon the exact performance required and/or developments in the art.

The adhesive composition 50 is preferably impervious to water and exhibits proficient adhesive properties, flexibility and resilience, even in the set state.

A second layer 40 of the composite membrane 10 comprises mesh with typically a mass of 160 g/m² ± 60 g/m². The strands 42, 44 of the mesh are arranged so as to form a plurality of apertures therethrough. The mesh has typically between 10 and 30 warps/100 mm preferably about 20 warps/100 mm and between 10 and 30 wefts/100 mm, preferably about 20 wefts/100 mm. The number of warps and number of wefts may be equal so as to form a matrix of squares or may be unequal so as to form a matrix of rectangles. The mesh 40 is laid over and embedded in the outer surface of the adhesive composition 50. Areas of the adhesive composition 50 are exposed through the apertures of the mesh 40 and thus an adhesive surface of the adhesive composition 50 is exposed through the apertures. The mesh 40 provides dimensional stability to the composite membrane 10, facilitating a load bearing function, and can also provide a suitable keying surface for the affixing of tiles thereto, as discussed later.

The warps and wefts of the mesh 40 should not be so wide or so numerous as to cover a significant portion of the underlying adhesive composition 50. Ideally, at least 50% of the total area of the underlying adhesive composition 50 should be left exposed to permit tiles 110 applied to the composite membrane 10 to bond directly to the underlying adhesive composition 50. Also, to ensure that the tiles 110 can directly contact and bond with the underlying adhesive composition 50, the embedded mesh 40 should not have a profile which protrudes more than 0.5 mm above the surface of the adhesive composition 50.

Whilst the preferred embodiment of the present invention has been described as having an open mesh 40 of glass fibres, it will be appreciated that any open mesh may be provided and embedded in the adhesive composition 50. Glass fibres are particularly suited to this application because they have a comparatively low flexural rigidity which enables the composite membrane 10 to be easily rolled up into units for retail sale. However, examples of suitable alternative materials include synthetic polymeric based materials, such as polypropylene or polyethylene, and any other material that provides dimensional stability, is capable of bearing the loads imparted to the composite membrane 10 without compromising the impervious nature of the composite membrane 10, and allows the adhesive composition 50 to be exposed therethrough so as to provide an adhesive surface to receive tiles 110.

Layers 20, 30 each comprise a removable release film. In the preferred embodiment the layer 20 comprises 100g/m² paper siliconised on one side. The layer 30 in the preferred embodiment comprises a 50µ high density polythene film siliconised on one side, for use in protecting the adhesive qualities of the adhesive composition 50 prior to use. Ideally, the film layer 30 is siliconised on the side placed in contact with the adhesive surfaces of the bituminous composition 50 so as to facilitate ease of removal of the film 30 in use.

The release films 20, 30 are preferred for ease of handling, but are not essential.

The composite membrane 10 is produced in the form of a web which is suitable for being packaged either in sheet form or on rolls. The first layer of the adhesive composition 50 can be prepared and deposited as a thin film in a number of ways. This can be achieved either by flood coating and using a doctor blade to control the thickness of the adhesive composition 50, by using a transfer coating system, or by extrusion. The mesh 40 is then hot laminated into the adhesive composition 50 at a temperature above ambient. The composite membrane 10 is cooled by passage over an array of water cooled elements. Typically, the web would be supplied in sheets or rolls of widths of 150 mm, 450 mm and 1000 mm.

Figures 3 and 4 illustrate the composite membrane 10 in use in affixing tiles 110 to a wall 100. It is preferred that the composite membrane 10 is directly adhered to a substrate such as a wall or a floor of a building. The composite membrane 10 is particularly adapted for use in affixing tiles 110 to a substrate since the composite membrane 10 is impervious to water, has proficient adhesive properties to both enable reliable adhesion to the substrate to be tiled and to provide an adhesive surface for receiving tiles 110. The mesh 40 provides the adhesive composition 50 with the necessary dimensional stability for directly receiving tiles 110. Thus, the composite membrane 10 can function as both a waterproofing membrane and as a tile adhesive. In some circumstances, it may be necessary to treat the substrate with a primer before adhering the composite membrane 10 to the surface.

In use, the composite membrane 10 supplied either in sheet form or on a roll can be cut to the required dimensions to match the area of the substrate 100 to be tiled. The removable release film 20 is peeled away from the underside of the adhesive composition 50 so as to expose an adhesive surface which is offered up to and into contact with the substrate 100 to be tiled, for instance a wall or a floor with a roll of material a release sheet need only be applied on one side of the composite membrane 10. Firm pressure is applied to the exposed surface 30 of the composite membrane 10 by any suitable means such as a hand or a roller so as to ensure complete contact between the adhesive composition 50 and the substrate 100. Once in position, the composite membrane 10 is immediately ready to receive tiles 110. However, the provision of the removable release film 30 enables the composite membrane 10 to remain in place for any length of time until the tiles 110 are ready to be applied. The application of tiles 110 may, for instance, be phased by selectively exposing the adhesive composition 50 protruding through the mesh 40 underlying the releasable film 30. Once the releasable film 30 has been removed, the tiles 110 are offered up to and placed into contact with the mesh 40 and aligned in the required position. Once positioned, firm pressure is applied to the exposed surface of the tile 110 so as to place the underside of the tile 110 in direct contact with the adhesive surface of the adhesive composition 50 to effect a bond. Once in position and in bonded contact with the adhesive composition 50, the tiles 110 are immediately affixed and there is no requirement for drying or setting before the bonded joint achieves its full strength. Accordingly, the space formed between adjacent tiles 110 may be filled with grout immediately to complete the surface finish.

When in place, the composite membrane 10 provides a medium between the tiles 110 and the substrate 100 which is impervious to water, offering proficient and reliable adhesive properties. The composite membrane 10 can accommodate relative movement between surfaces, without compromising its waterproofing or adhesive capabilities. The composite membrane 10 prevents dampness from the building substrate 100 (e.g. wall or floor) from reaching the back of the tiles 110, where otherwise it could lead to mould growth and/or adhesive deterioration. It also prevents water splashed on the tiles 110 from reaching the building substrate 100 or leaking into other areas. The composite membrane 10 has a flexible and extensible adhesive layer which can accommodate movement, shrinkage or cracking of the building substrate 100 without compromising the waterproofing or adhesive function of the composite membrane 10. The composite membrane 10 is a cold applied product and requires no drying or setting and has no volatile components.

In applications which are subjected to heavier duties, conventional adhesive may also be used in addition to the composite membrane 10. In this case, the composite membrane 10 is applied to the substrate 100 to be tiled as described above. However, when the removable release film 30 is peeled away from the mesh 40 embedded in the adhesive composition 50, conventional tile adhesive may be applied to the exposed surface of the composite membrane 10 before the tiles 110 are applied to it. The mesh 40 provides a key on the exposed surface of the composite membrane 10 to which the adhesive adheres, and this is enhanced by the adhesive properties of the adhesive composition 50. Tiles 110 may then be applied to the layer of conventional adhesive in accordance with usual practice.

## Claims

1. A composite membrane comprising:
a first layer comprising an adhesive composition, and
a second layer comprising a mesh, wherein:
the mesh is directly embedded in a surface of the first layer of adhesive with areas of the adhesive composition exposed through apertures in the mesh, the mesh having between 10 and 30 warps/100mm and between 10 and 30 wefts/100mm.

2. A composite membrane as claimed in claim 1 wherein the adhesive composition comprises a bituminous composition or a butyl rubber composition.

3. A composite membrane as claimed in claim 2 wherein the bituminous composition comprises bitumen and one of styrene-butadiene-rubber and styrene-butadiene-styrene.

4. A composite membrane as claimed in claim 2 wherein the bituminous composition comprises bitumen, styrene butadiene and styrene isoprene.

5. A composite membrane as claimed in claim 2 wherein the butyl rubber composition comprises butyl rubber, carbon black, soft clay and paraffin wax.

6. A composite membrane as claimed in any one of the preceding claims wherein the first layer of adhesive provides a waterproofing layer.

7. A composite membrane as claimed in any one of the preceding claims wherein the first layer of adhesive has a uniform thickness in the range 1.0 mm to 2.0 mm.

8. A composite membrane as claimed in any one of the preceding claims wherein the first layer of adhesive has a softening point above 100°C.

9. A composite membrane as claimed in any one of the preceding claims wherein the mesh comprises an open mesh woven glass fabric.

10. A composite membrane as claimed in any one of claims 1 to 8 wherein the mesh comprises an open mesh of synthetic polymeric material.

11. A composite membrane as claimed in any one of the preceding claims wherein the mesh has a mass of 160 g/m² ± 60 g/m².

12. A composite membrane as claimed in any one of the preceding claims wherein the mesh has about 20 warps/100 mm.

13. A composite membrane as claimed in any one of the preceding claims wherein the mesh has about 20 wefts/100 mm.

14. A composite membrane as claimed in any one of the preceding claims wherein at least 50% of the total area of the underlying adhesive composition is exposed through the mesh.

15. A method of manufacture of a composite membrane as defined in any one of the preceding claims comprising the steps of:
forming a substrate of an adhesive composition;
forming a mesh; and
embedding the mesh in one surface of the substrate of adhesive in such a way that areas of the adhesive composition are exposed through apertures in the embedded mesh.

16. A method of applying tiles to a building substrate such as a wall or a floor using the composite membrane of any one of the preceding claims, the method comprising the steps of:
i) optionally treating the building substrate with a primer prior to affixing the membrane on the building substrate.
ii) covering the building substrate with the composite membrane, with the embedded mesh facing outwardly away from the building substrate and with the composite membrane being applied to the building substrate with pressure firm enough that the adhesion exhibited by the adhesive composition of the membrane adheres the membrane to the building substrate;
iii) optionally coating a tile adhesive over the exposed surface of the membrane and the embedded mesh; and
iv) subsequently applying to the membrane a plurality of tiles, the tiles overlaying the embedded mesh and being adhered to the membrane and thereby to the building substrate by the adhesion exhibited by those areas of the adhesive composition exposed through the apertures in the mesh material.
